# NOUVEAU FASCICULE DE BREVET EUROPEEN

(11) **EP 3 810 510 B2**
(45) Date de publication et mention de la décision concernant l'opposition: **18.06.2025**
(45) Mention de la délivrance du brevet: 13.04.2022
(21) Numéro de dépôt: 19742865.9
(22) Date de dépôt: 14.06.2019
(51) Int. Cl.: B64F 5/40, F01M 11/04, F01M 11/10

(54) **RESERVOIR EMBARQUE DE DRAINAGE D'UN MOTEUR D'AERONEF**
ENTLEERUNGSTANK AN BORD FÜR FLUGZEUGMOTOREN
ON-BOARD AIRCRAFT ENGINE DRAINING TANK

(30) Priorité: 14.06.2018 FR 1855221
(43) Date de publication de la demande: 28.04.2021
(73) Titulaire: SAFRAN AIRCRAFT ENGINES, 75015 Paris (FR)
(72) Inventeur: COUPARD, Josselin Xavier, 77550 Moissy-Cramayel (FR); GARNIER, Alméric Pierre Louis, 77550 Moissy-Cramayel (FR)
(74) Mandataire: Cabinet Beau de Loménie
(86) Numéro de dépôt international: PCT/FR2019/051447
(87) Numéro de publication internationale: WO 2019/239075

(56) Documents cités:
- EP-B1- 2 014 877
- JP-A- H08 200 031
- JP-B2- 3 445 007
- US-A- 5 263 445
- US-A- 5 964 318
- US-A1- 2016 312 707

## Description

### Arrière-plan de l'invention

La présente divulgation concerne le domaine aéronautique, et plus particulièrement un aéronef.

Dans le présent contexte, on entend par « moteur d'aéronef » tout propulseur embarqué à bord d'un aéronef et destiné à sa propulsion en vol, en particulier les moteurs à turbine à gaz, comme par exemple les turboréacteurs à simple ou double flux, les turbopropulseurs ou les turbomoteurs, mais aussi les moteurs à pistons ou électriques.

Normalement les moteurs d'aéronef comprennent des pièces mobiles soumises à des contraintes mécaniques et thermiques élevées. Il est donc généralement important d'alimenter en fluide lubrifiant certains éléments du moteur, notamment les paliers de support d'arbres rotatifs. En outre, les moteurs d'aéronef peuvent comprendre aussi des actionneurs hydrauliques, qui peuvent notamment utiliser du carburant comme fluide hydraulique et/ou comme lubrifiant. Une partie de ces fluides peut s'échapper par vaporisation ou écoulement liquide, et représente une source potentielle de pollution environnementale. Ainsi, pour réduire ou éviter cette pollution, des réservoirs embarqués ont été proposés, notamment dans la publication de demande internationale de brevet WO 2015/082833 A1, pour recevoir des fluides drainés du moteur, et les contenir jusqu'à leur vidange contrôlée.

En outre, afin de surveiller l'état d'un moteur, et notamment de son fluide lubrifiant, il est connu de procéder à des analyses de ce fluide lubrifiant. Toutefois, ceci exige normalement le prélèvement d'échantillons de fluide lubrifiant du moteur, et leur transport jusqu'à un dispositif d'analyse, ce qui peut être difficile lorsque ce moteur est embarqué à bord d'un aéronef.

Finalement, il est aussi connu d'intégrer des capteurs de qualité de fluide lubrifiant directement dans le circuit de lubrification d'un aéronef. Toutefois, cette intégration peut être difficile à cause de la nécessité de maintenir la circulation du fluide lubrifiant à travers ce circuit.

Le document US5964318 divulgue un système de mesure de la qualité et du niveau de lubrifiant dans un réservoir de lubrifiant de moteur, comprenant une vanne pour diriger sélectivement une partie de lubrifiant du moteur à travers un premier conduit de retour vers le moteur ou à travers un second conduit de retrait du moteur. Le document JP3445007 B2 concerne un contrôleur de circulation du lubrifiant de moteur pour faire le plein de lubrifiant même en vol, en fonction de la consommation du lubrifiant et extraire ledit lubrifiant d'un circuit de pression en fonction d'une quantité de circulation du lubrifiant.

### Objet et résumé de l'invention

La présente invention vise à remédier à ces inconvénients, en proposant un aéronef selon la revendication 1.

### Description

Suivant un premier aspect, ce but peut être atteint grâce au fait qu'au moins un premier compartiment de ce réservoir embarqué, qui comprend un premier passage d'admission pour recevoir du fluide drainé du moteur, et un premier passage de vidange obturable, comprend aussi un premier ensemble capteur de qualité pour capter au moins un paramètre de qualité du fluide drainé du moteur. Ce premier ensemble capteur de qualité peut notamment comprendre un capteur optique et/ou un capteur acoustique. Ce capteur optique ou acoustique peut être configuré pour effectuer une mesure de transmission, absorption, réflexion et/ou réfraction du fluide contenu dans le réservoir embarqué, sur une ou plusieurs longueurs d'onde, notamment afin d'en caractériser la composition, décantation et/ou stratification de ce fluide dans le réservoir embarqué. Par ailleurs, le premier ensemble capteur de qualité peut aussi comprendre un capteur de conductivité électrique, notamment pour contribuer à la détection d'eau et/ou d'autres polluants dans le fluide drainé du moteur.

Grâce à l'installation du premier ensemble capteur de qualité dans le premier compartiment du réservoir embarqué, il est ainsi possible d'effectuer une surveillance de l'état du moteur, et notamment mais pas seulement de son fluide lubrifiant, à travers au moins de la qualité du fluide drainé naturellement du moteur, et cela donc sans devoir interférer plus dans la circulation normale des fluides de fonctionnement au sein du moteur.

En outre, le premier compartiment peut comporter un premier capteur de niveau pour capter un niveau de fluide dans le premier compartiment. Ainsi, il est possible de surveiller, non seulement la qualité du fluide drainé, mais aussi sa quantité, permettant ainsi l'identification d'éventuels blocages et/ou fuites dans sa circulation au sein du moteur, et éventuellement le déclenchement d'une vidange du premier compartiment au-delà d'un niveau de fluide prédéterminé.

Le réservoir peut aussi comporter au moins un capteur supplémentaire, qui peut être situé en dehors du premier compartiment, et notamment en amont de celui-ci, et peut par exemple comprendre un capteur de viscosité et/ou un capteur de particules ferromagnétiques, afin notamment de contribuer aussi à la détection d'eau et/ou à la caractérisation des particules solides en suspension dans le fluide drainé du moteur.

Pour éviter aussi que le niveau de fluide dans le premier compartiment ne devienne pas excessif, le premier compartiment peut aussi comporter un premier déversoir de trop-plein.

A part le premier compartiment, le réservoir embarqué peut comporter aussi au moins un deuxième compartiment avec un deuxième passage d'admission de fluide drainé du moteur, un deuxième passage de vidange obturable, et un deuxième ensemble capteur de qualité du fluide drainé du moteur. Il peut être ainsi possible de recevoir et surveiller séparément le fluide reçu à travers le premier passage d'admission, et celui reçu à travers le deuxième, ces fluides pouvant être de natures différentes (par exemple, lubrifiant et carburant) ou provenir de parties différentes du moteur. Le ou les capteurs du deuxième ensemble capteur de qualité peuvent être aussi sélectionnés parmi les types mentionnés auparavant pour le premier ensemble capteur de qualité, et le deuxième compartiment peut aussi comporter en outre son propre capteur de niveau et/ou déversoir de trop-plein. Par ailleurs, le réservoir embarqué peut comporter aussi un autre compartiment relié, en aval des premiers et deuxième compartiments, aux premier et deuxième passages obturables de vidange. En conséquence, après des analyses séparées des fluides dans les premier et deuxième réservoirs, ceux-ci peuvent être vidangés dans cet autre compartiment, pour y être stockés jusqu'à une éventuelle vidange et/ou pour effectuer d'autres analyses avec un autre ensemble capteur de qualité, pouvant aussi comprendre un ou plusieurs capteurs sélectionnés parmi les types mentionnés auparavant pour le premier ensemble capteur de qualité, et cet autre compartiment peut aussi comporter en outre son propre capteur de niveau, déversoir de trop-plein et/ou passage de vidange obturable.

Un deuxième aspect de la présente invention concerne un procédé suivant la revendication 11.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 illustre schématiquement un aéronef équipé d'un moteur d'aviation avec un réservoir embarqué de drainage de fluide suivant un mode de réalisation,
- la figure 2 est une illustration schématique du réservoir embarqué de la figure 1,
- la figure 3 est une illustration schématique d'un réservoir embarqué suivant un deuxième mode de réalisation.

### Description détaillée de l'invention

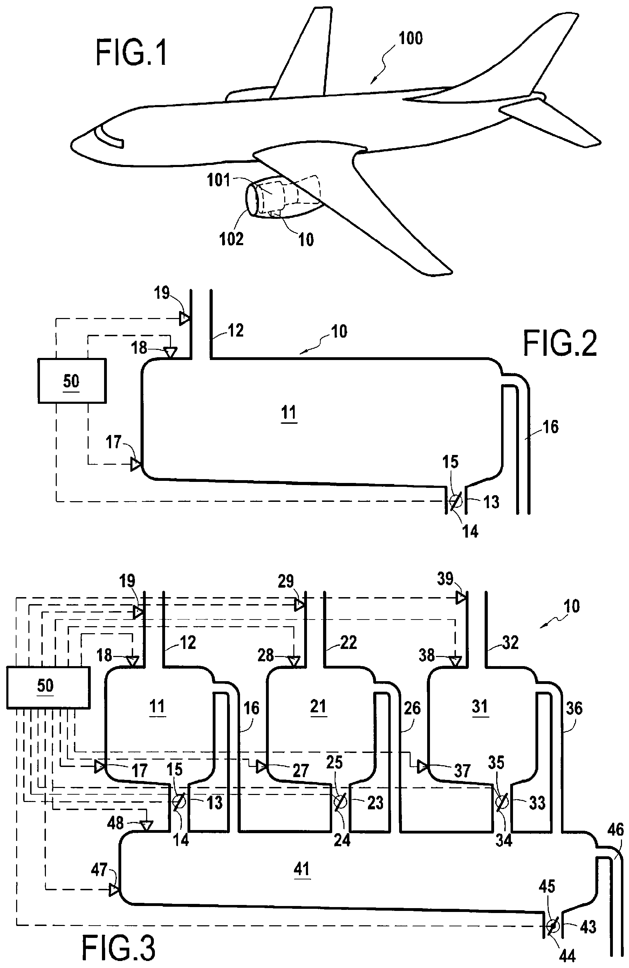

La figure 1 illustre un aéronef 100 équipé de deux moteurs 101, qui peuvent notamment être des moteurs à turbine à gaz, et plus particulièrement des turboréacteurs à double flux. Comme dans le mode de réalisation illustré, chacun de ces deux moteurs 101 est équipé d'un réservoir 10 embarqué de drainage, destiné à recevoir des fluides drainés du moteur 101, comme par exemple du lubrifiant échappant des paliers de support d'arbres rotatifs du moteur 101 et/ou du carburant échappant du circuit d'alimentation en carburant du moteur 101 et/ou d'actionneurs utilisant ce carburant comme fluide hydraulique. Ainsi, ce réservoir 10 peut permettre d'éviter que ces fluides échappent à l'extérieur du moteur de manière incontrôlée, et constituent ainsi une source de pollution environnementale.

Pour cela, le réservoir 10 est situé sous le moteur 101, dans une nacelle 102 enveloppant celui-ci et présenter un premier compartiment 11 avec, par exemple à son sommet, un premier passage d'admission 12 de fluide drainé du moteur 101. Les fluides échappant du moteur 101 et ruisselant par gravité à l'intérieur de la nacelle 102 peuvent ainsi être reçus, à travers ce premier passage d'admission 12, dans ce premier compartiment 11, qui peut être l'unique compartiment du réservoir 10, comme dans l'exemple illustré sur la figure 2.

Pour assurer sa vidange contrôlée, le réservoir 10 peut aussi présenter, par exemple au fond du premier compartiment 11, un premier passage de vidange 13. Ce premier passage de vidange 13 peut aussi présenter une vanne 14 avec un actionneur 15 connecté à une unité de commande 50 pour commander l'ouverture et l'obturation du premier passage de vidange 13. Toutefois, l'obturation du premier passage de vidange 13 pour retenir le fluide drainé dans le premier compartiment 11 peut alternativement être obtenue par d'autres moyens, comme par exemple un simple bouchon. En outre, pour éviter un débordement incontrôlé du premier compartiment 11, celui-ci peut aussi comporter un déversoir de trop-plein 16.

La réception des fluides drainés du moteur 101 dans le réservoir 10 offre une opportunité pour surveiller de manière continue l'état du moteur 101 à travers ces fluides : en effet, tant leur nature comme leur volume peuvent être indicatifs de cet état. Pour prendre avantage de cela, le premier compartiment 11 peut aussi comprendre, comme dans l'exemple illustré, non seulement un premier capteur de niveau 18 pour capter un niveau du fluide dans le premier compartiment, et donc la quantité de fluide drainé du moteur 101, mais aussi un premier ensemble capteur de qualité 17 pour capter au moins un paramètre de qualité du fluide drainé du moteur 101. Le premier ensemble capteur de qualité 17 du fluide peut notamment comprendre un capteur de conductivité électrique, un capteur optique et/ou un capteur acoustique. Le capteur optique ou acoustique peut être configuré pour effectuer une mesure de transmission, absorption, réflexion et/ou réfraction du fluide contenu dans le réservoir embarqué, sur une ou plusieurs longueurs d'onde, notamment afin d'en caractériser la composition, décantation et/ou stratification de ce fluide dans le réservoir embarqué. Par ailleurs, le premier capteur de niveau 18 et le premier ensemble capteur de qualité 17, situés dans le premier compartiment 11, peuvent être complémentés par au moins un capteur supplémentaire 19, tel que, par exemple, un capteur de viscosité et/ou un capteur de particules ferromagnétiques, situé à l'extérieur du premier compartiment 11 et notamment en amont de celui-ci, comme par exemple dans le premier passage d'admission 12, en contact avec l'écoulement dynamique du fluide. Il est néanmoins aussi envisageable d'intégrer un capteur de viscosité et/ou de particules ferromagnétiques au premier ensemble capteur de qualité 17 dans le premier compartiment 11 ou dans un conduit annexe à celui-ci. Le capteur de viscosité peut par exemple être un capteur capacitif.

Le premier capteur de niveau 18, le premier ensemble capteur de qualité 17, et l'au moins un capteur supplémentaire 19 peuvent être connectés à l'unité de commande 50. L'unité de commande 50 peut être configurée pour déterminer, à partir des données captées par le premier capteur de niveau 18, par le premier ensemble capteur de qualité 17, et par l'au moins un capteur supplémentaire 19, non seulement la quantité de fluide drainé par le moteur 101, mais aussi des caractéristiques physiques et/ou chimiques de celui-ci, et notamment sa teneur en polluants en suspension, y compris en eau et/ou en particules. L'unité de commande 50 peut par ailleurs comprendre une mémoire intégrée pour stocker ces données et être intégrée dans et/ou ou connectée à un système 150 de pronostic et gestion de santé (en anglais : « Prognosis and health management » ou « PHM ») du moteur 101, embarqué à bord de l'aéronef 100 et/ou situé au sol, permettant d'effectuer un diagnostic du moteur 101 pour diriger la maintenance prévisionnelle de celui-ci en fonction de la quantité de fluide drainé du moteur 101 et des caractéristiques physiques et/ou chimiques de celui-ci, telles que déterminées par l'unité de commande 50 à partir des données capturées par le capteur de niveau 18, par le premier ensemble capteur de qualité 17, et par l'au moins un capteur supplémentaire 19, seules ou en combinaison avec d'autres facteurs. Le système 150 de pronostic et gestion de santé peut notamment être configuré pour diagnostiquer un défaut d'étanchéité au sein du moteur 101 et/ou une usure excessive de pièces mobiles du moteur 101, et éventuellement préconiser une opération de maintenance ou d'inspection, immédiate ou différée, et/ou autoriser le décollage de l'aéronef 100 en fonction de ce diagnostic.

En fonctionnement, les fluides drainés du moteur 101 peuvent donc ruisseler par gravité à l'intérieur de la nacelle 102, par au moins un conduit de drainage, jusqu'au premier passage d'admission 12, à travers lequel ils pénètrent dans le premier compartiment 11 du réservoir embarqué 10. Dans ce premier compartiment 11, au moins un paramètre de qualité du fluide, comme par exemple sa turbidité et/ou sa conductivité électrique, pourrait être capté à travers le premier ensemble capteur de qualité 17, et transmis à l'unité de commande 50. Au moins un autre paramètre supplémentaire de qualité du fluide, comme par exemple sa viscosité ou la présence de particules ferromagnétiques, pourrait être capté à travers l'au moins un capteur supplémentaire 19 et transmis aussi à l'unité de commande 50. Par ailleurs, le niveau de fluide dans le premier compartiment 11 pourrait aussi être capté, à travers le premier capteur de niveau 18 et transmis aussi à l'unité de commande 50. Cette mesure de niveau de fluide dans le premier compartiment pourrait être effectuée à des intervalles de temps réguliers afin d'établir un taux volumique de drainage de fluide dans le temps. Les données obtenues ainsi à travers le premier ensemble capteur de qualité 17, l'au moins un capteur supplémentaire 19 et/ou le premier capteur de niveau 18 pourraient alors être évaluées dans l'unité de commande 50 pour déterminer des caractéristiques physiques et/ou chimiques du fluide, et notamment sa teneur en polluants en suspension, y compris en eau et/ou en particules. Ces informations peuvent alors être transmises au système 150 de pronostic et gestion de santé, afin de permettre une surveillance continue de l'état du moteur 101, même en vol, et diriger sa maintenance prévisionnelle.

Ainsi, par exemple, les données captées par le premier ensemble capteur de qualité 17, éventuellement en combinaison avec celles captées par l'au moins un capteur supplémentaire 19, peuvent permettre d'identifier les proportions de lubrifiant, carburant et eau dans le fluide drainé par le moteur 101. L'unité de commande 50, en multipliant ces proportions par le volume total de fluide drainé, qui peut être déduit à partir des données captées par le capteur de niveau 18, peut obtenir les volumes totaux de lubrifiant, carburant et eau drainés par le moteur 101 vers le premier compartiment 11. Un défaut d'étanchéité des parties lubrifiées du moteur 101, qui peut notamment affecter la qualité de l'air prélevé au moteur 101 pour le système de pressurisation de la cabine de l'aéronef, peut être diagnostiqué par le système 150 de pronostic et gestion de santé suite à la détection d'un volume excessif de lubrifiant dans le fluide drainé. La détection d'un volume excessif de carburant dans le fluide drainé, d'autre part, peut permettre au système 150 de pronostic et gestion de santé de diagnostiquer un défaut d'étanchéité du circuit d'alimentation de carburant et/ou d'actionneurs utilisant le carburant comme fluide hydraulique. Les données captées par le premier ensemble capteur de qualité 17, éventuellement en combinaison avec celles captées par l'au moins un capteur supplémentaire 19, peuvent aussi permettre d'identifier quantité et type de particules solides dans le fluide drainé par le moteur 101 vers le premier compartiment 11, distinguant notamment entre particules ferromagnétiques et particules riches en carbone. Le système 150 de pronostic et gestion de santé peut ainsi diagnostiquer une usure excessive suite à la détection, à travers le premier ensemble capteur de qualité 17 et/ou le capteur supplémentaire d'une quantité excessive de particules ferromagnétiques dans ce fluide drainé, en particulier de particules ferromagnétiques de taille dépassant un seuil prédéterminé, tandis qu'une mauvaise combustion au sein d'une chambre de combustion du moteur 101 pourrait être diagnostiquée par le système 150 de pronostic et gestion de santé suite à la détection d'une quantité excessive de particules riches en carbone dans ce même fluide drainé. Suite à ces diagnostics, le système 150 de pronostic et gestion de santé peut aussi préconiser une opération de maintenance ou d'inspection, immédiate ou différée, et/ou autoriser le décollage de l'aéronef 100 en fonction de ce diagnostic.

Finalement, l'ouverture de la vanne 14 du premier passage de vidange 13 pourrait être commandée par l'unité de commande 50, par exemple lorsque l'aéronef 10 se trouve dans une station de vidange au sol, afin de permettre une vidange contrôlée du premier compartiment 11. Il serait toutefois aussi envisageable, dans un mode de réalisation alternatif ne disposant pas de déversoir de trop-plein, d'activer cette ouverture et vidange en réponse à un signal du premier capteur de niveau 18 indiquant un niveau excessif de fluide drainé dans le premier compartiment 11.

Bien que dans le mode de réalisation illustré sur la figure 2 le premier compartiment 11 soit l'unique compartiment du réservoir embarqué 10, il est aussi envisageable de diviser ce réservoir embarqué 10 en plusieurs compartiments 11, 21, 31, 41, comme dans l'exemple illustré sur la figure 3, notamment pour recevoir dans des compartiments 11, 21, 31 différents, à travers des passages d'admission 12, 22, 32 séparés, des fluides drainés de plusieurs parties différentes du moteur 101, par exemple à travers des conduits de drainage séparés, afin de capter séparément, à travers des ensembles capteurs de qualité 17, 27, 37, des capteurs supplémentaires 19,29,39, et des capteurs de niveau 18, 28, 38 correspondants, le volume et au moins un paramètre de qualité des fluides drainés de chacune de ces parties du moteur 101 afin de transmettre à l'unité de commande 50 des données plus précises concernant l'état du moteur 101 pour le pronostic et la gestion de la santé de celui-ci. Comme dans le mode de réalisation illustré, chacun des premier, deuxième et troisième compartiments 11, 21, 31 du réservoir embarqué 10 peut être analogue au premier et unique compartiment 11 du mode de réalisation illustré sur la figure 2, et comporter donc son propre passage d'admission 12, 22, 32, passage de vidange 13, 23, 33 avec vanne 14, 24, 34 et actionneur 15, 25, 35, déversoir de trop-plein 16, 26, 36, ensemble capteur de qualité 17, 27, 37, et capteur de niveau 18, 28, 38. Comme illustré, des capteurs supplémentaires 19, 29, 39, tels que, par exemple, des capteurs de viscosité et/ou des capteurs de particules ferromagnétiques, peuvent aussi être séparément associés à chacun des compartiments 11, 21, 31, et installés à l'extérieur de ceux-ci, et notamment en amont de chacun de ces compartiments 11, 21, 31, par exemple dans leurs passages d'admission 12, 22, 32 respectifs ou, alternativement, en aval, dans les passages de vidange respectifs 13, 23, 33. Il est toutefois aussi envisageable, comme expliqué dans le contexte du mode de réalisation illustré sur la figure 1, d'intégrer des capteurs de viscosité et/ou de particules ferromagnétiques au premier, deuxième et troisième ensembles capteurs de qualité 17, 27, 37 dans les premier, deuxième et troisième compartiments 11, 21, 31 ou dans des conduits annexes à chacun de ceux-ci. Chaque actionneur 15, 25, 35, ensemble capteur de qualité 17, 27, 37, capteur supplémentaire 19, 29, 39 et capteur de niveau 18, 28, 38 peut être connecté à l'unité de commande 50.

L'unité de commande 50 peut être configurée pour déterminer, à partir des données captées par le premier capteur de niveau 18, par le premier ensemble capteur de qualité 17, et par l'au moins un capteur supplémentaire 19, non seulement la quantité de fluide drainé par les différentes parties du moteur 101 vers les compartiments 11, 21, 31 respectifs du réservoir 10, mais aussi des caractéristiques physiques et/ou chimiques du fluide drainé vers chaque compartiment 11, 21, 31, et notamment sa teneur en polluants en suspension, y compris en eau et/ou en particules. De manière analogue à l'exemple de la figure 1, l'unité de commande 50 dans cet exemple alternatif peut aussi comprendre par ailleurs une mémoire intégrée pour stocker ces données et être intégrée dans et/ou ou connectée à un système 150 de pronostic et gestion de santé du moteur 101, embarqué à bord de l'aéronef 100 et/ou situé au sol, permettant d'effectuer un diagnostic du moteur 101 pour diriger la maintenance prévisionnelle de celui-ci en fonction de la quantité et des caractéristiques physiques et/ou chimiques du fluide drainé de chaque partie du moteur 101 vers chaque compartiment 11, 21, 31 du réservoir 10, telles que déterminées par l'unité de commande 50 à partir des données capturées par les capteurs de niveau 18, 28, 38, par les ensembles capteurs de qualité 17, 27, 37, et par les capteurs supplémentaire 19, 29, 39, seules ou en combinais on avec d'autres facteurs. Le système 150 de pronostic et gestion de santé peut notamment être configuré pour diagnostiquer un défaut d'étanchéité et/ou une usure excessive de pièces mobiles dans des régions spécifiques du moteur 101, et éventuellement préconiser une opération de maintenance ou d'inspection, immédiate ou différée, et/ou autoriser le décollage de l'aéronef 100 en fonction de ce diagnostic.

En outre, comme illustré, à part ces premier, deuxième et troisième compartiments 11, 21, 31 disposés en parallèle, le réservoir 10 peut aussi comprendre un compartiment supplémentaire 41 disposé en aval de ceux-ci, de telle manière que tant les passages de vidange 13, 23, 33 comme les déversoirs de trop-plein 16, 26, 36 des premier, deuxième et troisième compartiments 11, 21, 31 débouchent dans ce compartiment supplémentaire 41. Ce compartiment supplémentaire 41 peut aussi présenter, comme illustré, un passage de vidange 43 avec vanne 44 et actionneur 45, un déversoir de trop-plein 46, un ensemble capteur de qualité 47, et un capteur de niveau 48. L'actionneur 45, l'ensemble capteur de qualité 47, et le capteur de niveau 48 du compartiment supplémentaire 41 peuvent aussi être connectés à l'unité de commande 50.

En fonctionnement, des fluides drainés de différentes parties du moteur 101 peuvent donc ruisseler par gravité à l'intérieur de la nacelle 102, par des conduits de drainage séparés, jusqu'aux passages d'admission 12, 22 et 32, à travers lesquels ils pénètrent dans les compartiments 11, 21, 31 correspondants du réservoir embarqué 10. Dans chacun de ces premier, deuxième et troisième compartiments 11, 21 et 31, au moins un paramètre de qualité, comme par exemple conductivité électrique, du fluide provenant d'une partie différente du moteur pourrait être capté à travers l'ensemble capteur de qualité 17, 27, 37 correspondant, et transmis à l'unité de commande 50. Au moins un autre paramètre supplémentaire de qualité du fluide drainé vers chaque compartiment 11, 21, 31, comme par exemple sa viscosité ou la présence de particules ferromagnétiques, pourrait être capté à travers les capteurs supplémentaires 19, 29, 39 et transmis aussi à l'unité de commande 50. Par ailleurs, le niveau de fluide dans chacun des premier, deuxième et troisième compartiments 11 pourrait aussi être capté, à travers les capteurs de niveau 18, 28, 38 correspondants et transmis aussi à l'unité de commande 50. Cette mesure de niveau de fluide dans chacun des premier, deuxième et troisième compartiments pourrait être effectuée à des intervalles de temps réguliers afin d'établir un taux volumique de drainage de fluide de chaque partie du moteur dans le temps. Les données obtenues ainsi à travers les ensembles capteurs de qualité 17, 27, 37, les capteurs supplémentaires 19, 29, 39 et/ou les capteurs de niveau 18, 28, 38 pourraient alors être évaluées dans l'unité de commande 50 pour déterminer des caractéristiques physiques et/ou chimiques de celui-ci, et notamment sa teneur en polluants en suspension, y compris en eau et/ou en particules. Ces informations peuvent alors être transmises au système 150 de pronostic et gestion de santé afin de permettre une surveillance continue de l'état des différentes parties du moteur 101, même en vol, et diriger sa maintenance prévisionnelle, de manière analogue à celle qui a été décrite pour l'exemple de la figure 1.

L'ouverture de chacune des vannes 14, 24, 34 des premier, deuxième et troisième passages de vidange 13, 23, 33 peut être commandée, à des intervalles de temps réguliers, par l'unité de commande 50 pour vider vers le compartiment supplémentaire 41 les fluides drainés contenus dans les premier, deuxième et troisième compartiments 11, 21, 31, et ainsi empêcher leur débordement. Les déversoirs de trop-plein 16, 26, 36 peuvent de toute manière empêcher un tel débordement même quand le taux de drainage de fluide vers un des premier, deuxième ou troisième compartiments 11, 21, 31 est tellement élevé que celui-ci se remplit avant la commande d'ouverture de la vanne 14, 24, 34 correspondante. Il serait toutefois aussi envisageable, dans un mode de réalisation alternatif dans lequel les premier, deuxième ou troisième compartiments 11, 21, 31 ne disposeraient pas de déversoirs de trop-plein, d'activer cette ouverture et vidange en réponse à un signal du capteur de niveau 18, 28, 38 correspondant indiquant un niveau excessif de fluide drainé dans le compartiment 11, 21, 31 correspondant.

Le fluide sortant de chacun des premier, deuxième et troisième compartiments 11, 21, 31 à travers les passages de vidange 13, 23, 33 ou les déversoirs de trop-plein 16, 26, 36 peut être reçu dans le compartiment supplémentaire 41, qui peut avoir une plus grande capacité pour contenir tout le fluide drainé jusqu'à la prochaine vidange du réservoir embarqué 10 au sol. Dans ce compartiment supplémentaire 41 aussi, au moins un paramètre de qualité du fluide, comme par exemple sa turbidité et/ou sa conductivité électrique, pourrait être capté à travers l'ensemble capteur de qualité 47, et transmis à l'unité de commande 50. Par ailleurs, le niveau de fluide dans le compartiment supplémentaire 41 pourrait aussi être capté, à travers le capteur de niveau 48 et transmis aussi à l'unité de commande 50. Cette mesure de niveau de fluide dans le compartiment supplémentaire pourrait aussi être effectuée à des intervalles de temps réguliers afin d'établir un taux volumique de drainage de fluide dans le temps. Les données obtenues ainsi à travers l'ensemble capteur de qualité 47 et/ou par le capteur de niveau 48 pourraient aussi être évaluées dans l'unité de commande 50, et transmises aussi au système 150 de pronostic et gestion de santé, pour contribuer à la surveillance continue de l'état du moteur 101.

Finalement, l'ouverture des vannes 14, 24, 34 et 44 des passages de vidange 13, 23, 33, 43 pourrait être commandée par l'unité de commande 50, par exemple lorsque l'aéronef 100 se trouve dans une station de vidange au sol, afin de permettre une vidange contrôlée de l'ensemble des compartiments 11, 21, 31 et 41 du réservoir embarqué 10. Il serait toutefois aussi envisageable, dans un mode de réalisation alternatif dans lequel le compartiment supplémentaire 41 ne disposerait pas de déversoir de trop-plein 46, de commander l'ouverture de la vanne 44 et activer ainsi la vidange du compartiment supplémentaire 41 en réponse à un signal du capteur de niveau 48 indiquant un niveau excessif de fluide drainé dans le compartiment supplémentaire 41.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Aéronef (100) comprenant deux moteurs (101), une nacelle (102) enveloppant chaque moteur (101) et un réservoir embarqué (10) de drainage de chaque moteur (101) de l'aéronef (100), le réservoir embarqué (10) étant situé, sous le moteur (101), dans la nacelle (102), et comportant un premier compartiment (11) avec :
un premier passage d'admission (12) pour recevoir du fluide drainé du moteur,
un premier passage de vidange (13) obturable, et
un premier ensemble capteur de qualité (17) pour capter au moins un paramètre de qualité du fluide drainé du moteur (101) vers le premier compartiment (11) du réservoir embarqué (10).

2. Aéronef (100) suivant la revendication 1, dans lequel le premier ensemble capteur de qualité (17) comprend un capteur optique et/ou un capteur acoustique.

3. Aéronef (100) suivant l'une quelconque des revendications 1 ou 2, dans lequel le premier ensemble capteur de qualité (17) comprend un capteur de conductivité électrique.

4. Aéronef (100) suivant l'une quelconque des revendications 1 à 3, dans lequel le premier compartiment (11) comporte en outre un premier capteur de niveau (18) pour capter un niveau de fluide dans le premier compartiment (11).

5. Aéronef (100) suivant l'une quelconque des revendications 1 à 4, dans lequel le réservoir embarqué (10) comporte en outre au moins un capteur supplémentaire (19).

6. Aéronef (100) suivant la revendication 5, dans lequel l'au moins un capteur supplémentaire (19) est situé en amont du premier compartiment (11).

7. Aéronef (100) suivant l'une quelconque des revendications 5 ou 6, dans lequel l'au moins un capteur supplémentaire (19) comprend un capteur de viscosité et/ou un capteur de particules ferromagnétiques.

8. Aéronef (100) suivant l'une quelconque des revendications 1 à 7, dans lequel le premier compartiment (11) comporte en outre un premier déversoir de trop-plein (16).

9. Aéronef (100) suivant l'une quelconque des revendications 1 à 8, dans lequel le réservoir embarqué (10) comporte en outre au moins un deuxième compartiment (21) avec un deuxième passage d'admission (22) pour recevoir du fluide drainé du moteur, un deuxième passage de vidange (23) obturable, et un deuxième ensemble capteur de qualité (27) pour capter une qualité du fluide drainé du moteur (101).

10. Aéronef (100) suivant la revendication 9, dans lequel le réservoir embarqué (10) comporte en outre un compartiment supplémentaire (41) relié, en aval des premiers et deuxième compartiments (11,21), aux premier et deuxième passages obturables de vidange (13,23).

11. Procédé de surveillance d'un fluide de 'chacun des deux moteurs (101) d'un aéronef (100), comportant les étapes suivantes :
drainage du fluide de chaque moteur (101), vers un premier compartiment (11) d'un réservoir embarqué (10) situé, sous le moteur (101), dans une nacelle (102) enveloppant le moteur (101), à travers au moins un premier passage d'admission (12),
capture, à travers un premier ensemble capteur de qualité (17), d'au moins un paramètre de qualité du fluide drainé vers le premier compartiment (11) du réservoir embarqué (10), et
vidange du premier compartiment (11) du réservoir embarqué (10), à travers un premier passage de vidange (13) obturable.

## Patentansprüche

1. Luftfahrzeug (100) umfassend zwei Triebwerke (101), eine Gondel (102) die jeden Triebwerk (101) umhüllt, und ein Bordtank (10) für den Abfluss jedes Triebwerks (101) des Luftfahrzeugs (100), wobei der Bordtank (10) unter dem Triebwerk (101), in der Gondel (101), sich befindet, und ein erstes Abteil (11) umfasst mit:
einem ersten Einlasskanal (12) zur Aufnahme von aus dem Triebwerk abgeflossenem Fluid,
einem ersten verschließbaren Entleerungskanal (13), **dadurch gekennzeichnet, dass** das erste Abteil auch eine erste Qualitätssensoranordnung (17) zum Erfassen mindestens eines Qualitätsparameters des vom Triebwerk (101) in das erste Abteil (11) des Bordtanks (10) abgeflossenem Fluids umfasst.

2. Luftfahrzeug (100) nach Anspruch 1, wobei die erste Qualitätssensoranordnung (17) einen optischen Sensor und/oder einen akustischen Sensor umfasst.

3. Luftfahrzeug (100) nach einem der Ansprüche 1 oder 2, wobei die erste Qualitätssensoranordnung (17) einen Sensor für die elektrische Leitfähigkeit umfasst.

4. Luftfahrzeug (100) nach einem der Ansprüche 1 bis 3, wobei das erste Abteil (11) ferner einen ersten Füllstandssensor (18) zum Erfassen eines Fluidfüllstands im ersten Abteil (11) aufweist.

5. Luftfahrzeug (100) nach einem der Ansprüche 1 bis 4, wobei der Bordtank (10) ferner mindestens einen zusätzlichen Sensor (19) aufweist.

6. Luftfahrzeug (100) nach Anspruch 5, wobei der mindestens eine zusätzliche Sensor (19) stromaufwärts des ersten Abteils (11) angeordnet ist.

7. Luftfahrzeug (100) nach einem der Ansprüche 5 oder 6, wobei der mindestens eine zusätzliche Sensor (19) einen Viskositätssensor und/oder einen Sensor für ferromagnetische Partikel umfasst.

8. Luftfahrzeug (100) nach einem der Ansprüche 1 bis 7, wobei das erste Abteil (11) zusätzlich einen ersten Überlauf (16) aufweist.

9. Luftfahrzeug (100) nach einem der Ansprüche 1 bis 8, wobei der Bordtank (10) ferner mindestens ein zweites Abteil (21) mit einem zweiten Einlasskanal (22) zur Aufnahme von aus dem Triebwerk abgeleitetem Fluid, einen zweiten verschließbaren Entleerungskanal (23) und eine zweite Qualitätssensoranordnung (27) zum Erfassen einer Qualität des aus dem Triebwerk (101) abgeleiteten Fluids umfasst.

10. Luftfahrzeug (100) nach Anspruch 9, wobei der Bordtank (10) ferner ein zusätzliches Abteil (41) umfasst, das stromabwärts des ersten und zweiten Abteils (11, 21) mit dem ersten und zweiten verschließbaren Entleerungskanal (13, 23) verbunden ist.

11. Verfahren zur Überwachung eines Fluids eines jedes von zwei Triebwerken (101) eines Luftfahrzeugs (100), das die folgenden Schritte umfasst:
Abfluss von Fluid aus jedem Triebwerk (101) durch mindestens einen ersten Einlasskanal (12) in ein erstes Abteil (11) eines Bordtanks (10) der sich unter dem Triebwerk (101), in einer den Triebwerk (101) umhüllenden Gondel befindet,
Erfassen, durch eine erste Qualitätssensoranordnung (17), die in dem ersten Abteil enthalten ist, von mindestens einem Qualitätsparameter des Fluids, das in das erste Abteil (11) des Bordtanks (10) abfließt, und
Entleeren des ersten Abteils (11) des Bordtanks (10) durch einen ersten verschließbaren Entleerungskanal (13).

## Claims

1. Aircraft (100) comprising two engines (101), a nacelle (102) surrounding each engine (101) and an on-board drainage reservoir (10) of engine (101) of the aircraft (100), the on-board reservoir (10) being located, under the engine (101), within the nacelle (102), and including a first compartment (11) with:
a first intake passage (12) for receiving fluid drained from the engine,
a first closeable emptying passage (13),
**characterized in that** the first compartment also comprises a first quality sensor assembly (17) for detecting at least one quality parameter of the fluid drained from the engine (101) to the first comparment (11) of the on-board reservoir (10).

2. The aircraft (100) according to claim 1, wherein the first quality sensor assembly (17) comprises an optical sensor and/or an acoustic sensor.

3. The aircraft (100) according to either one of claims 1 or 2, wherein the first quality sensor assembly (17) comprises an electrical conductivity sensor.

4. The aircraft (100) according to any one of claims 1 to 3, wherein the first compartmen (11) further includes a first level sensor (18) for detecting a fluid level in the first compartment (11).

5. The aircraft (100) according to any one of claims 1 to 4, wherein the on-board reservoir (10) further includes at least one additional sensor (19).

6. The aircraft (100) according to claim 5, wherein the at least one additional sensor (19) is situated upstream of the first compartment (11).

7. The aircraft (100) according to any one of claims 5 or 6, wherein the at least one additional sensor (19) comprises a viscosity sensor and/or a ferromagnetic particle sensor.

8. The aircraft (100) according to any one of claims 1 to 7, wherein the first compartment (11) further includes a first overflow pipe (16).

9. The aircraft (100) according to any one of claims 1 to 8, wherein the on-board reservoir (10) further includes at least one second compartment (21) with a second intake passage (22) for receiving fluid drained from the engine, a second closeable emptying passage (23) and a second quality sensor assembly (27) for detecting a quantity of fluid drained from the engine (101).

10. The aircraft (100) according to claim 9, wherein the on-board reservoir (10) further includes an additional compartment (41) connected, downstream of the first and second compartments (11, 21), to the first and second closeable emptying passages (13, 23).

11. A method for monitoring a fluid of each of the two engines (101) of an aircraft (100) engine (101), including the following steps:
draining the fluid from each engine (101), to a first compartment (11) of an on-board reservoir (10) located, under the engine (101), within a nacelle (102) surrounding the engine (101), by means of at least one first intake passage (12),
detecting, by means of a first quality sensor assembly (17) comprised within the first compartment, at least one quality parameter of the fluid drained to the first compartment (11) of the on-board reservoir (10), and
emptying the first compartment (11) of the on-board reservoir (10) by means of a first closeable emptying passage (13).
